Europäisches Patentamt

European Patent Office

Office européen des brevets

(11) Publication number: **0 191 203**
A2

(12) **EUROPEAN PATENT APPLICATION**

(21) Application number: **85300300.2**

(22) Date of filing: **16.01.85**

(51) Int. Cl.⁴: **B 23 P 15/30,** C 21 D 9/22, C 23 C 28/02

(43) Date of publication of application: **20.08.86**
**Bulletin 86/34**

(84) Designated Contracting States: **DE FR GB IT NL SE**

(71) Applicant: **Lemelson, Jerome Hal, 85 Rector Street, Metuchen New Jersey, 08840 (US)**

(72) Inventor: **Lemelson, Jerome Hal, 85 Rector Street, Metuchen New Jersey, 08840 (US)**

(74) Representative: **Smith, Norman Ian et al, F.J. CLEVELAND & COMPANY 40-43 Chancery Lane, London WC2A 1JQ (GB)**

(54) Cutting tool structures, apparatus and method for making same.

㉗ An apparatus and method are provided for fabricating cutting tools and tool cutting edges and for improving the structures of cutting tools, particularly the cutting edge portions thereof. In one form, the method involves subjecting the edge El or edges of a cutting tool 10 such as a blade or other form of cutting tool, to the intense heat of a radiation beam such as an intense light beam generated by a laser or an electron beam generated by an electron gun. The intense heat serves one or more of a number of functions including the vaporizing, eroding or melting of a portion of the material of the surface stratum of a blade or cutting tool adjacent the cutting edge portion thereof and in certain instances including that material which defines the cutting edge. The liquified thin layer of material which is formed and remains adjacent the cutting edge of the tool, tools rapidly as the beam passes, forming a non-crystalline layer of the metal or alloy from which it is melted, which layer is harder and more corrosion resistant than the original alloy thereby providing an improvement in the cutting edge and material adjacent thereto which is subject to attrition during the cutting operation. The substrate of which the hard surface stratum is formed may comprise the base of the cutting tool or a coating thereon wherein such base or coating may be made of alloys of such metals as nickel, cobalt, chromium, tungsten, titanium, silicon, zirconium, and other hard metals. If the cutting tool is a preshaped object, computer controlled means is employed to predeterminately position the tool and beam generating means and to operate the beam to effect a predetermined blade hardening operation. If the cutting tool is in the form of a blade it may be continuously fed past the radiation beam generator which op-

erates continuously on or adjacent to the preshaped edge thereof to form a hard coating or surface stratum adjacent to and over the edge. A finishing operation such as gringing, honing and/or lapping operation may be employed against the cutting edge after the operation of the beam thereon to finish the edge as may such operations be performed prior to the operation of the beam as well as after the beam operation. In a particular form, the beam or a plurality of beams may be predeterminately operated to partially or completely form the cutting edge while the tool is in operation or while it is inoperative but held by a tool holder or tool changer so as to sharpen or enhance the operation of the tool after it has experienced cutting operations. In yet another form, one or more intense radiation beams may be focused and utilized to vaporize or melt metals or alloys forming or coated on cutting tools for the purpose of forming or sharpening cutting edges thereof. Two electron or laser beams may operate per set or in combination for example, to vaporize the edge of a blade or cutting tool in a manner to sharpen same after it has become dull or during its formation.

- 1 -

CUTTING TOOL STRUCTURES AND APPARATUS AND METHOD

FOR MAKING SAME

DESCRIPTION

This invention relates to an apparatus and method for either providing a cutting edge on a cutting device such as a cutting tool or blade or sharpening such a cutting device, after it has become dulled due to use or in order to improve its cutting characteristics. In particular, the method involved in the present invention employs intense radiation, such as a flat or narrow radiation beam or a number or such beams, to properly erode or vaporize material in order to provide a cutting edge or to sharpen a cutting edge of a tool or blade.

It is customary to provide a cutting edge on a tool by either machining same using either a milling cutter or other form of cutting tool employing one or more cutting edges or by grinding material adjacent the edge of the cutting portion of the tool. While such techniques are quite widely employed, they suffer certain shortcomings due to wear of the tooling or abrasive member which frequently requires replacement or sharpening itself in order to function properly.

- 2 -

By employing specially generated and directed radiation to fabricate or sharpen a cutting edge, the present invention attains certain advantages over conventional techniques which are employed for edge forming or sharpening purposes. In one form of the invention, an intense radiation beam such as a narrow coherent light beam generated by a laser or an electron beam generated by an electron gun is directed in such a manner while relative scanning movement is effected between the beam and a select portion or portions of an edge forming material such as a metal balde material, an insert for a cutting tool such as a milling cutter, drill or other tool or other form of device which is desired to be shaped with an edge or portion thereof which is designed to effect a cutting action. Erosion or vaporization of material from the blade, insert or tool is effected in such a manner as to form or sharpen a previously formed cutting edge portion thereof. The radiation or an auxiliary radiation beam or a number of beams may also operate to effect one or more additional necessary functions such as the formation of a shallow cavity or depression adjacent the cutting edge, the notching of the blade or cutting edge along its length to form a saw-tooth type of cutting edge and, in certain instances, the annealing or hardening of material

- 3 -

adjacent to and/or including the cutting edge to improve its physical characteristics. The same radiation or auxiliary radiation may also be employed to effect one or more additional secondary operations such as the forming of a non-crystalline layer of metal along the cutting edge or the application of a lubricating or plating material to the portion of the tool or blade which includes the cutting edge thereof.

Accordingly, it is one object of this invention to provide a new and improved apparatus and method for forming an edge, such as a cutting edge, along a selected portion of an article of manufacture or for sharpening an edge such as a previously formed cutting edge.

According to a first aspect of the present invention there is provided an apparatus for forming a cutting edge on material comprising in combination: a support, means for supporting an article on said support which article contains a surface portion defined by a plurality of surfaces which converge toward each other and which join each other along a region capable of being sharpened to define an edge, means for generating intense radiation and directing said radiation toward said region of said article joining said surfaces wherein said intense radiation serves to erode material

- 4 -

from the surface of the article, and means for effecting relative scanning movement between said intense radiation and said article in a manner to erode material along said region whereby a sharpening effect is attained and a cutting edge is provided therealong.

According to a second aspect of the present invention there is provided a method of forming a cutting edge along a portion of a cutting tool comprising the steps of providing a thin portion of a cutting tool with side walls thereof defining a first edge, generating an intense radiation beam and direction sad radiation beam against said edge of said first portion of said tool to cause said beam to predeterminately vaporize material from the vicinity of said edge portion so as to increase the sharpness of the edge portion and to form a cutting edge thereof having improved cutting characteristics over that of the original edge portion.

According to a third aspect of the present invention there is provided a method of improving the cutting edge of a cutting tool comprising:

(a)   forming a cutting edge along a select portion of a cutting tool made of crystalline metal, and

(b)   converting a portion of the metal adjacent to and defining said cutting edge portion of said tool to a

- 5 -

non-crystalline amorphous metal structure.

According to a fourth aspect of the present invention there is provided a method of sharpening a cutting tool comprising:

(a)   detecting dullness of a cutting tool as it operates, and

(b)   generating a detection signal,

(c)   employing said detection signal to initiate a sharpening operation by automatically controlling the operation of a radiation beam generating means and relative scanning movement between said beam generating means and said tool to effect control scanning an erosion of material of said tool adjacent the cutting edge thereof.

According to a fifth aspect of the present invention there is provided a method of shaping a solid material comprising:

(a)   generating intense radiation capable of melting matter,

(b)   selectively directing said radiation against an article,

(c)   effecting controlled scanning movement between said radiation and said article to cause the melting of a select portion of the material of said article, and

(d)   directing a stream of high velocity fluid and

- 6 -

causing said fluid to effect controlled flow of the melted material of said article across the surface of said article so as to predeterminately change the shape of said article.

According to a sixth aspect of the present invention there is provided a cutting tool comprising:

(a)   a tool base,

(b)   a cutting edge portion of said tool base formed with a select rake angle,

(c)   the material adjacent said cutting edge of said tool base including the cutting edge portion thereof formed of a non-crystalline metal,

(d)   the remaining material of said tool base being formed of a crystalline metal.

The invention will be described now by way of example only with particular reference to the accompanying drawings.  In the drawings:

Figure 1 is a side view of a portion of a cutting tool;

Figure 2 is a side view of the cutting tool of Figure 1 and a beam machining apparatus for forming a cutting edge along a portion of the tool;

Figure 3 is a side view or modified form of beam machining apparatus for forming a cutting edge along the cutting tool of the type shown in Figure 1;

- 7 -

Figure 4 is a side view of a portion of another type of cutting tool;

Figure 5 is a side view of the cutting tool of Figure 4 and a beam machining apparatus for forming a cutting edge therefor;

Figure 6 is a side view of another form of beam machining apparatus operating on a portion of the cutting tool;

Figure 7 is a side view of a portion of the cutting tool having a circular cutting edge formed by beam machining material therefrom, and

Figure 8 is an end view of another form of beam machining apparatus for forming a cutting edge along a strip or bar.

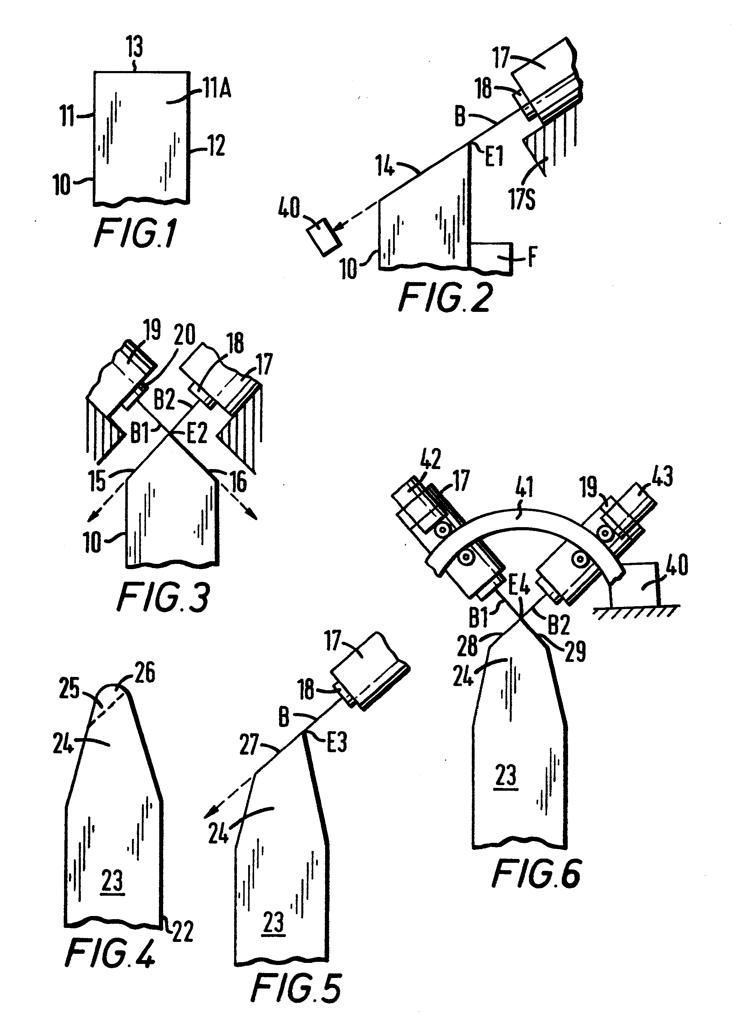

In Figure 1 is shown a portion of a cutting tool 10 formed of metal or ceramic material and having parallel side walls 11 and 12, edge walls, one of which 11A is shown and an end wall 13. The tool 10 may be part of a cutting knife, milling machine cutter, drill, saw blade, cutting tool insert or other device emplyed to cut and remove material from work. As shown in Figure 2, a cutting edge El has been formed by removing material from the end of the tool 10. The tool 10 is shown aligned with a beam generating device 17, such as a laser for generating an intense beam of coherent radiation or an electron gun for generating an intense electron beam or other device capable of generating intense enough radiation to cut, erode or vaporize material from the cutting tool. The beam generating device 17 has an output 18 from which an intense radiation beam B is directed along a path to form or sharpen the cutting edge E1. In other words, the beam B is of such an intensity and is so directed or scanned to either form the cutting edge E1 by vaporizing or eroding material from the end of the tool or to sharpen a previously formed edge portion of the tool.

The tool of Figure 2 may thus be formed with a cutting edge portion either by a combination of mechanical removal of material and intense radiation caused removal of material effected by the intense beam or by properly directing and relatively moving, if necessary, the intense radiation beam and/or the cutting tool to form a suitable cutting edge thereon or to sharpen a previously formed cutting edge.

The tool 10 is preferably held in a fixture F, which fixture may or may not also support the intense radiation beam generating device 17 and a shield or radiation absorbing device 40, which may be a heat sink operable to receive direct or reflected radiation of the beam B which has either intersected the cutting tool or

- 9 -

is a portion thereof which has not intersected the cutting tool, depending on the particular mode of operation.

The apparatus illustrated in Figure 2 is preferably supported within an enclosure (not shown) and includes means (also not shown) for removing vapor and/or particles from the vicinity of the tool which vapor and particles may form part of the machining or sharpening operation. The laser or electron gun 17 is shown supported on a base 17S which may be rigidly affixed to a major support while the tool 10 is driven in a fixed path about and/or along one or more axes. In a second mode of operation, the radiation generating device 17 may be driven in a fixed path in one or more directions and/or about one or more axes while the tool 10 is held stationary or both may be automatically controlled in movement to cause the intense radiation beam B to properly scan a surface or surfaces of the tool 10 so as to properly remove material therefrom and thereby effect sharpening of the tool and the formation of one or more cutting edges E1 along a portion or portions of the tool to be used in removing material from work by cutting.

It is also noted that the laser or electron gun 17 may be operable to harden or generate hard surface material along the portion or portions of the tool

- 10 -

extending to the cutting edge thereof, which portions suffer greatest attrition during a cutting operation, by the rapid heating of material of the surface stratum of the tool in a predetermined manner as determined by the intensity of the Beam B, the scanning path of the beam as it intersects the tool and any additional factors such as the atmosphere surrounding the tool, which may contain material to be plated, deposited or implanted in the surface stratum of the tool intersected by the beam.

In Figure 3 is shown a tool sharpening arrangement wherein two intense radiation beam generating devices, such as lasers and/or electron guns 17 and 19 have their respective outputs 18 and 20 arranged to direct respective intense radiation beams B1 and B2 along respective paths at an angle to each other which intersect the end of the cutting tool 10 in a manner to form or erode material from angulated surfaces 15 and 16 at the end of the cutting tool to form a cutting edge E2 where the surfaces 15 and 16 intersect. Beams B1 and B2 may either intersect each other at or near the cutting edge E2 or may be directed offset from each other while relative scanning movement is effected between the radiation beams and the tool as described.

As provided in Figure 2, shielding or beam energy absorption devices similar to 40, may be disposed supported by the mounts 17S and 19S for the beam generators 17 and 19 beyond the sides of the cutting tool to receive and absorb radiation energy while the tool 10 is predeterminately moved past the beam generating devices and/or the beam generating devices are predeterminately moved with respect to the tool. As in the arrangement illustrated in Figure 2, the apparatus of Figure 2 may be supported within an enclosure, housing or shield and may include suction or other fluidic means for removing particles and/or vapor of the material of the tool, which is formed during the beam machining operation.

In Figure 4 is shown the end portion of a cutting tool 23 having a shank portion 22 and a tapered end 24, the tip 25 of which is illustrated as having a rounded or dulled edge 26. Sharpening of the dull edge 26 is effected as illustrated in Figure 5 by means of an intense radition device 17 of the type described which directs its beams B at a selected angle to the longitudinal axis of the tool 23 to form, by erosion and/or vaporization of material from the end portion 24, a cutting edge E3. Here again, scanning of the end of the tool 23 may be effected by controlled movement of the beam generating device 17 on its mount and/or controlled movement of the tool on its support.

- 12 -

In Figure 6, two beam generating devices 17 and 19 of the types described, are supported on a mount 40 having a circular track 41, along which track the respective beam generating devices may be adjustably supported or driven by respective motor drive means 42 and 43 which may be automatically controlled in their operations by a timer, computer or microprocessor to respectively change the angles of the intense radiation beams B1 and B2 generatd by each device so as to progressively scan and erode or vaporize material from the end 24 of the tool 23 to form predetermined surfaces 28 and 29 which define a cutting edge E4 having a predetermined rake or angle as determined by the angle between the beams B1 and B2 when the beam machining operation is terminated.

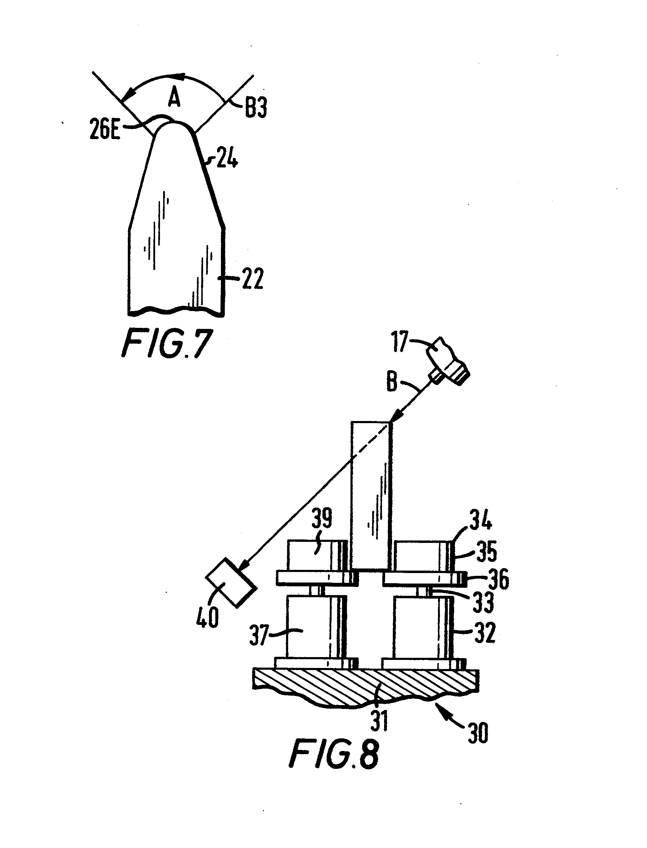

While the cutting edges E1 to E4 shown in Figures 2, 3,5 and 6 are substantially straight line cutting edges, a circular cutting edge or one or any desired shape may be formed by properly controlling relative movement of the beam generating device, and thereby the beam thereof, and the tool during the beam cutting operation. In Figure 7, a single beam B3 generated by an intense radiation beam generating device of one of the types described is caused to scan along an arc for an angle A, during which scanning operation material is

- 13 -

removed from end portion 24 of the tool 22 to form an arcuate profiled cutting edge 26E, such as the cutting edge required for a lathe cutting tool or other form of cutting tool. By properly controlling the movement of the one or more beam generating devices employed to vaporize and/or erode material from the cutting tool and/or controlling movement of the cutting tool itself with respect to such beam generating device or devices, cutting edges of any predetermined configuration may be formed or may be reconditioned or sharpened. Numerical and/or adaptive control means may be employed to effect such cutting edge formation or rennovation. It is also noted that cutting edges may be formed, reconditioned or rennovated with respect to cutting tools, by the means illustrated herein, while the cutting tools are either disposed in a chuck or holder forming part of a machine tool or a tool changer for machine tool, thereby eliminating the need to remove the tool from its holder and replace it with a new tool while the tool is either discarded or transported to a reconditioning or sharpening machine, thus eliminating or reducing a substantial amount of machine tool down time.

In Figure 8 is shown a machine 30 for sharpening or forming a cutting edge E5 at or near one corner of a strip or block 22B of metal or ceramic material, as such

- 14 -

strip or block is driven past a stationary laser or electron gun 17 supported, as described, with respect to a base 31 and a shield or radiation absorption device 40 disposed on the other side of the material 22B as shown and preferably also supported by the base 31 or the support for the radiation beam device 17.

The block or strip 22B is shown being driven by means of a plurality of powered rollers 34 and 39, each of which are respectively supported on shafts 33 which extend upwardly from respective constant speed motors 32 and 37 or a gear drive arrangement for rotating such rollers at constant speed to drive the strip or block therebetween in a given direction. Roller 34 is composed of a reduced diameter portion 35 and a flanged lower portion 36 wich supports the bottom edge of the strip or block 22B and roller 39 has a similar configuration so that by controlled operation of the motors 32 and 37, the strip or block may be predeterminately driven therebetween in a given direction to permit suitable scanning of the upper portion of the strip by the intense radiation beam B to form a cutting edge by erosion or vaporization of material as shown in Figure 2.

Control of the opeation of the lasers 17 and 19 and the motors (not shown) for effecting relative driving scanning movement between the lasers and the cutting tools or blades having cutting edge portions which are formed or sharpened by the beamed radiation, may be effected by suitable computer control means involving numerical control or the like, with or without adaptive control of the beam generation, pulsing and scanning. Control of the operation of the laser and the generation of its intense beam to cause controlled vaporization and/or article erosion of the cutting tool material to form or sharpen a cutting edge or edges of the tool, may be effected in an open loop or closed loop control system involving the computer or microprocessor control of one or more of the driving motors for the laser and/or work or the driving movement or rotation of one or more mirrors which receive and direct the beamed radiation against the work. In a form of adaptive control, one or more sensors may be employed which sense variations in direct and/or reflected radiation after it has intersected the work to provide feedback signals which are either analyzed or directly employed to effect such scanning movement and radiation beam control. Such sensor or sensors may be supported by or adjacent the cutting laser or its mount or a deflection controlled mirror or mirrors employed to receive and direct the laser beam to effect scanning movement with respect to

- 16 -

the tool. Such a feedback or adaptive control system may operate in one or more of the following manners:

(a) A photoelectric detector, such as a photo-transistor or photo-diode, is fixedly located with respect to the laser or laser beam and is adapted to move therewith or to otherwise scan either direct light received thereby from the laser or light which is reflected from the surface of the tool during either the sharpening opeation or a separate light detection operation prior to initiating the more intense beam sharpening operation. In other words, the detector receives light generated either by the laser during its beam erosion and/or vaporizing operation at a lower intensity and directs its radiation beam along a path which is equal or parallel to the path of the machining or vaporizing laser beam. Such a direct or reflected light detection means may be employed to indicate when the scanning axis of the machining laser beam crosses the edge of the cutting tool to be sharpened or machined at which edge intersection a detection or control signal may be generated by either detecting the appearance or disappearance of the light energy and may be utilized to automatically control the operation of one or more motors which drive the work and/or laser or laser beam mirror so as to properly control scanning movement for the purpose described which includes forming or sharpening the cutting edge of the tool. For example, a signa generated by such a photoelectric detector when it detects direct laser light may be employed to terminate or prevent operation of the laser in its high intensity beam generating and work vaporizing mode until the appearance of the cutting edge tool at the scanning axis of the beam which intersectsthe laser light whereupon, by means of simple electronic logic, a control signal is generated which controls the laser to increase its intensity for vaporizing or otherwise eroding material along a cutting edge until the scanning axis of the beam is again beyond the cutting edge and at least a portion of the direct radiation is detected.

(b)  Conversely, if reflected light is photoelectrically detected, its disappearance or decrease in reflectivity may be photoelectrically detected by means of suitable microelectronic computing means connected to the output of the detector, which computing means generates one or more signals which are applied to control the operation of one or more motors effecting relative scanning movement between the tool and the laser or laser beam and the operation of the laser. Such control signals may be generated from a memory in response to the detection signal generated, as described, and may be employed to predeterminately control relative scanning movement between the radiation beam and the tool or work to effect computer control of the tool sharpening operation for each tool so detected or may be utilized to modity the command control effected when control signals are generated by the computer so as to properly effect the formation or sharpening of the tool cutting edge.

(c) A combination of direct and/or reflected light energy generated by the cutting laser and scanning the edge or border portion of the cutting tool, may be employed to cause one or more photoelectric detectors which are located, as described, to detect such direct and reflected light so as to provide an output signal or signals which are computer processed and analyzed to control the beam generating and scanning operation in a manner to predeterminately form or sharpen the cutting edge of the tool. Such output signals may be directly or indirectly after computer analysis, compared with reference signals generated from a memory so as to effect the generation of control signals for controlling the operation of the laser and/or relative scanning movement between the laser beam and the tool in the manner described. A summing amplifier or the like may be employed to receive such signals generated by the

- 19 -

photoelectric detector and output by memory, which summing amplifier generates different signals which are employed as control signals for controlling the laser and scanning as described.

(d) Infra-red detection of radiation generated when the laser beam heats the cutting tool material during the controlled vaporization of such material, by one or more infra-red radiation detectors, located as described, may be employed toi generate control signals for controlling the operation of the laser and/or deflection of its beam or movement of the work to effect relative scanning between the beam and the work during vaporizing and/or erosion of material from the tool.

(e) Detectors may also be employed for detecting both infra-red radiation generated when the tool is heated by the laser beam and direct or reflected laser light, as described, to provide output detection signals which may be computer processed and analyzed to control the laser and relative scanning movement to effect predetermined tool forming and sharpening.

If intense laser light energy is employed to perform the material removing opeations described by vaporizing and/or particle eroding such materia, a laser such as a carbon dioxide ($CO_2$) laser employing between one and ten watts of input energy is preferably employed

- 20 -

to effect such function or functions. The exact power required will depend on the material being machined, its thickness, the rate of material removal, etc. The diameter of the laser beam at the surfaceof the tool or blade being cut or sharpened is preferably in the range of .0001" to .001" depending on the physical characteristics of the material being vaporized or eroded or vaporized, the shape and dimensions of the cutting edge portion of the tool or blade. If large cutting tools are so formed by beam machining the cutting edge or edges thereof, input power to the laser may e increased to within the range of ten to twenty five watts to provide suitable erosion or vaporizing efficiency, while beam diameter may be increased to several thousands of an inch or more. A single laser beam may be split by suitable optical beam splitting means into two or more beams which may be directed to simultaneously vaporize and/or erode particles from the edge portion of a single tool at spaced apart locations thereof or to sequentially scan and machine and form the tool cutting edge or edges, one beam behind the other to remove respective portions of tool material, each of a different depth of material. Scanning speed will be a function of the intensity and configuration of the beam and, the desired configuration of the tool cutting edge portion so formed and the rate at which material removal is desired. Such speed may vary from a fraction of an inch per minute to several inclues per minute or higher. For example, while heavy lathe cutting tools may require a minute or more to beam machine an edge in the range of inches or less in length, razor or thin knife blades may be sharpened or have their cutting edges formed at the rate of one or several feet per minute when continuous beam machining is performed. If pulsed beam machining is employed to form or sharpen a cutting edge by eroding small particles of material from the cutting tool, the beam width at the tool surface will be a function of the diameter of the beam and beam time duration during scanning the tool. Beam pulse width may thus vary from .0001" to several thousandths of an inch or more. Pulsed radiation beams may also be employed to incrementally remove material from the cutting edge portion of the tool by vaporization of a small quantity of such material each time a pulse is generated and directed against a portion of the tool edge portion adjacent and directed against a portion of the tool edge portion adjacent a previously vaporized portion. Portions of cutting tool material in the order of ten to one hundred microns in diameter may be vaporized or removed as particles from the tool cutting edge portion being beam machined, each time a pulse of intense radiation intersects the tool material which may comprise tool steel, stainless steel or other metal alloy. Ceremets or other hard ceramic tool forming materials may also be so formed or sharpened.

If an electron beam is employed for sharpening or forming tool cutting edges, it will properly be focused at the surface of the tool material being machined. Depending again on the nature of the material employed for the tool or cutting edge portion thereof, the size and shape of the cutting edge portion thereof and the scanning or pulse rate, the intensity, shape and scanning rate of the electron beam will be determined in accordance with the parameters set forth above. Beam focus may be varied as machining progresses in accordance with focus control signals derived from a computer memory and/or adaptive control means which may also be employed to control the beam intensity and scanning rate to optimize or most efficiently effect the cutting edge forming or sharpening operation.

- 23 -

Modifications and variations in the apparatus hereinbefore described and noted as follows:

1. The intense radiation beams described may be pulsed in their operations or continuously generated to erode and/or vaporize material from the substrate or may be operated by means of a combination of intense short pulses and longer pulses which are interposed between the pulses to function by either the erosion of small portions of the cutting tool material from the surface thereof and/or by the vaporization of cutting tool material. In other words, the cutting edge may be formed by pulsed erosion of small quantities of material removed from the cutting tool, by pulsed vaporization of small quantities of material, by continuous erosion or vaporization resulting from prolonged application of the intense radiation beam as it scans the cutting tool, or by a combination of particle erosion of removal and vaporization. As previously set forth, such scanning may be effected by programmed or computer controlled movement of a beam generating device or the beam thereof in or about one or more axes and/or movement of the cutting tool about or along one or more axes in a programmed cycle of movements together with controlled operation of the beam generating device so as to

0191203

- 24 -

predeterminately erode particles and/or vaporize material along and adjacent to the desired cutting edge. In perhaps the simplest form of operation, the beam may be deflection controlled in a given direction while the cutting tool is held stationary with the cutting edge portion thereof extending in such given direction or the cutting tool may be moved in a direction parallel to the desired cutting edge while the beam or beams scan the material adjacent to such cutting edge, either on one side or both sides thereof, to form a cutting edge by controlled particle erosion and/or vaporization of material adjacent the cutting edge. If the cutting edge extends in a curved direction or otherwise irregular configuration, the beam is controlled to scan the desired cutting edge configuration removing material from the tool in such a manner as to provide the desired manner as to provide the desired cutting edge. Depending on the nature of the material of the tool or material disposed adjacent to the cutting edge such edge may be formed by hardening the tool material along the portion or portions thereof intersected by the beam, which hardening may result from rapid heating, melting and cooling the material in such a manner as to provide a change in the internal structure of the surface stratum of such tool material. Cutting tool material

- 25 -

improvement may also be effected as a result of hardening or ion-implanting a hardening material adjacent and along a cutting edge of the tool, which hardening material may be provided in the atmosphere adjacent the tool or as a flow of hardening material in the form of particles, liquid or slurry which is disposed into the beam or along the surface of the tool adjacent the cutting edge thereof.

If the tool material is a metal, alloy or other material capable of being converted from a crystalline structure to an amorphous state by rapidly heating and rapidly cooling such material, the surface stratum of the tool material, particularly that portion or portions of the tool adjacent either or both sides of the cutting edge, may be subjected to beam heating of such intensity and duration as to melt and permit the rapid cooling of the surface stratum to provide such amorphous structure and hardening of the surface or surfaces adjacent to and including the cutting edge material. Such amorphous surface stratum, which is ordinarily harder in structure with suitable metal, non-metallic material or compound existing in the atmosphere adjacent the surface of the cutting tool, fed into the beam or beams directed against the cutting tool

- 26 -

and carried thereby to the surface stratum or otherwise disposed against the surface stratum of the cutting tool while it is scanned with the beam or beams.

II. The beam sharpening and conditioning arrangements illustrated in the drawings are subject to certain modiciations, such as the use therewith of auxiliary means for improving or hastening the sharpening operation. For example, one or more additional tools, such as a grinding wheel or cutting tool may be employed concurrently with the beam or beams to effect sharpening of the cutting tool or blade. A jet of gas, vapour or liquid may also be directed at high velocity against the cutting tool simultaneously or in sequence with the operation of the high intensity radiation beam or beams, to effect material removal and cutting edge formation and sharpening.

To repair or improve the physical characteristics of the cutting edge, one or more of the procedures described above may be employed together with controlled deposition or plating of hardening and lubricating material, such as a metal, metal alloy or ceramic material against the portion of the cutting tool which includes the cutting edge thereof. Thin films and coatings of extremely hard metals and alloys, such as tungsten, titanium, silicon, molybdenum, zirconium, boron, columbium and chromium as well as the carbides, nitrides, silicides, oxides, etc. of these metals may be plated or coated on the surface of the cutting tool adjacent and along the edge thereof immediately following or prior to the sharpening operation. If such hard surfacing material is disposed along the edge portion of a tool by coating or plating using one or more intense radiation beams to melt and bond a thin layer thereof against the cutting tool, such material may be sharpened to define a cutting edge or edges by the beam erosion and/or vaporization techniques described.

III. The cutting edge forming or enhancement techniques described may be employed to enhance or form a cutting edge along a select portion of a cutting tool while the tool is held in a chunk or other device in a cutting machine either in between cutting operations or while a cutting operation is being performed thereby. The cutting edge or blade enhancement or sharpening operation may be effected periodically or in response to detecting cutting edge dulling as a result of a prolonged period of cutting operation. Such detection

- 28 -

may be automatically effected by one or more sensors sensing such variables as resistance to cutting, temperature of the tool or work during the cutting operation, electro-optical scanning of the cutting edge or the automatic detection of vibrations experienced during cutting operation. Signals generated by such sensing may be processed by a computer or microprocessor which is programmed to automatically control the operation of one or more lasers or electron guns in scanning the tool in performing one or more of the functions described herein with respect to the cutting tool in between cutting operations or while it is performing a cutting operation on work.

IV. The laser or electron beam described may be operable to form a double cutting edge along the edge or border of a tool or a strip of metal by eroding or vaporizing material to form a channel which devides a dulled or flattened edge into two sharper edge portions extending parallel to each other. The beam may also serve to flatten an edge by erosion and thereafter vaporize a channel when directed perpendicular to the flattened portion which channel devides the edge portion into two sharper edge portions. Two or more of such parallel channels may be vaporize formed along the

- 29 -

border or dulled edge portion of a cutting tool or metal strip to form two or more cutting edges. Such channel or channels may also be so formed in the side wall of a cutting tool and adjacent an edge and material adjacent thereto vaporized along the length of the channels to form one or more projecting ridges or cutting edges in said side wall, a new type of cutting tool.

V. The combined action of an intense radiation beam and a fluid jet or auxilliary tool may be employed to form one or more cutting edges in a tool or cutting blade by erosion due to the vaporization of material by the beam and either erosion due to the fluid high velocity jet or deformation of material resulting from the reaction of the fluid jet thereto to form or define the edge formed by the beam by bending the material.

VI. Feedback and/or adaptive control means may be used to form or sharpen a cutting edge in a tool or blade wherein the material being eroded by the beam is scanned by a photosensor or other type of transducer to sense its shape and generate signals indicative of same which are analyzed by means of a computer and the

0191203

- 30 -

results employed to control the operation of the beam or beams employed for such operation.

VII. Material may be deposited by means of a beam or otherwise along a cutting edge, edge forming portion or dulled edge of a cutting tool and may thereafter be selectively vaporized as described above to form a cutting edge of such deposited material. The same beam employed to deposit the material may also be used to remove such material to form the cutting edge. The deposited material may be rendered as a high strength amorphous film or layer by means of the intense beam intersecting and melting same or when it is so deposited and rapidly cooled to solid state.

- 31 -

CLAIMS

1. An apparatus for forming a cutting edge on material comprising in combination:

a support,

means for supporting an article on said support which article contains a surface portion defined by a plurality of surfaces which converge toward each other and which join each other along a region capable of being sharpened to define an edge,

means for generating intense radiation and directing said radiation toward said region of said article joining said surface wherein said intense radiation serves to erode material from the surface of the article, and

means for effecting relative scanning movement between said intense radiation and said article in a manner to erode material along said region whereby a sharpening effect is attained and a cutting edge is provided therealong.

- 32 -

2. An apparatus in accordance with Claim 1 wherein said means for generating intense radiation comprises a radiation beam generating means.

3. An apparatus in accordance with Claim 2 including means for causing the beam of said radiation beam generating means to scan said region and erode material therefrom in a manner to sharpen or effect a cutting edge therealong.

4. An apparatus in accordance with Claim 2 or Claim 3 wherein said radiation beam generating means comprises an electron gun.

5. An apparatus in accordance with Claim 2 or Claim 3 wherein said radiation beam generating means comprises a laser.

6. An apparatus in accordance with Claim 1 wherein said intense radiation generating means is operable to simultaneously generate a plurality of radiation beams and to direct said beams at respective angles to respective of said surfaces so as to respectively erode material adjacent each of said surfaces and to form or sharpen a cutting edge along said region.

- 33 -

7. An apparatus in accordance with any preceeding Claim including sensing means for sensing the shape of the material remaining along said region as it is removed therefrom by the erosion of said beam, said sensing means being operable to generate a feedback signal which varies in accordance with variations in the shape of said region and means for utilizing said feedback signal to control the operation of said beam in eroding the material of said region.

8. An apparatus in accordance with Claim 1 including means for predeterminately moving said support so as to cause said intense radiation to scan said region of said article and to sharpen or generate a sharpened edge along a length of said region.

9. An apparatus in accordance with Claim 8 including means for generating a plurality of radiation beams and directing said beams along paths which fall in planes which are angulated with respect to each other at an angle which is such as to cause the beams to erode material from said region in a manner to define an edge therealong which edge is defined by surface portions of a desired configuration and angulation with respect to each other.

10. An apparatus in accordance with Claim 1 including means for generating said radiation in a manner to sharpen or provide cutting edge portions of said article at spaced apart locations of said region.

11. An apparatus in accordance with Claim 10 wherein said intense radiation is operable to sharpen the end portions of a saw blade.

12. An apparatus in accordance with Claim 1 in which said radiation generating means comprises means for generating an intense beam of radiation and said article comprises a cutting tool, said support comprising an operative mount for said cutting tool.

13. An apparatus in accordance with Claim 12 wherein said means for generating intense radiation and said means for effecting relative scanning movement between said intense radiation and said tool are operable in a manner to sharpen a dulled cutting edge of said cutting tool.

14. An apparatus in accordance with Claim 3 wherein said beam scanning means is operable to cause said beam to effect an oscillating scanning movement between said beam and said article to incrementally erode material therefrom to provide said sharpening effect.

15. An apparatus in accordance with Claim 2 including means for energizing and de-energizing said radiation beam generating means while effecting controlled relative movement between the axis of said radiation beam and said article in a manner to cause the axis of said beam to be moved in a path from travel beyond said edge of said article whereby said beam intersects a select portion of said edge of said article, means for detecting when the axis of said radiation beam intersects said edge of said article in such travel and generating a control signal, and means for applying said control signal to control said radiation generating means to generate said beam in a manner to controllably remove material from the edge portion of said article and to form a cutting edge along a select portion of said article.

16. An apparatus in accordance with Claim 2 wherein the controlled scanning movement of said beam is operable to form closely spaced parallel cutting edges along a select portion of said region of said article.

17. A method of forming a cutting edge along a portion of a cutting tool comprising the steps of providing a thin portion of a cutting tool with side walls thereof defining a first edge, generating an intense radiation beam and directing said radiation beam against said edge of said first portion of said tool to cause said beam to predeterminately vaporize material from the vicinity of said edge portion so as to increase the sharpness of the edge portion and to form a cutting edge thereof having improved cutting characteristics over that of the original edge portion.

18. A method in accordance with Claim 17 which includes directing at least two intense radiation beams at an acute angle to each other along paths which intersect beyond the original edge portion of the tool and at respective intensities which are sufficient to vaporize material from the opposite faces of the tool which forms said original edge portion so as to taper the material of the tool adjacent the original edge portion to form a new edge portion thereof.

19. A method in accordance with Claim 17 wherein the material adjacent the original edge portion of said cutting tool is a metal compound and the intense

- 37 -

radiation beam is operable to render a portion of the surface stratum thereof adjacent the original edge portion of the tool in a liquid condition, said method including predeterminately relatively moving said beam and tool in a manner to permit the liquified surface stratum to cool as the beam passes rapidly enough to form a non-crystalline glass like alloy on the surface of said tool adjacent said cutting edge portion which non-crystalline material is substantially harder and more corrosion resistant than the material from which it is formed.

20. A method in accordance with Claim 17 which includes the preliminary step of coating said cutting tool adjacent the cutting edge portion thereof with an alloy of such metals as nickel, cobalt, tungsten, titanium, silicon, molybdenum, chromium and zirconium prior to subjecting same to said action of said intense radiation beam and operating on said coating with said beam to form a non-crystalline structure on the surface of said coating adjacent the cutting edge of said tool.

21. A method in accordance with Claim 17 wherein the cutting tool is originally formed as a continuous strip of metal, said method including predeterminately

- 38 -

driving said strip at a predetermined rate past the means for generating said intense radiation beam.

22. A method in accordance with Claim 21 which includes performing at least one postoperation such as grinding, honing or lapping the edge portion of said tool after it has been operated on by said intense radiation beam.

23. A method of improving the cutting edge of a cutting tool comprising:

(a) forming a cutting edge along a select portion of a cutting tool made of crystalline metal, and

(b) converting a portion of the metal adjacent to and defining said cutting edge portion of said tool to a non-crystalline amorphous metal structure.

24. A method in accordance with Claim 23 wherein the steps of forming said cutting edge to a non-crystalline metal structure are effected substantially simultaneously.

- 39 -

25. A method in accordance with Claim 23 wherein the steps of forming said cutting edge and converting said portion of metal adjacent said cutting edge to a non-crystalline metal are affected sequentially.

26. A method in accordance with Claim 23 wherein the steps of forming said cutting edge and converting said portion of metal adjacent said cutting edge are effected by scanning with said radiation generated from a single source.

27. A method in accordance with Claim 23 including controllably depositing material adjacent said cutting edge to form a non-crystalline alloy of the material defining the cutting edge.

28. A method of sharpening a cutting tool comprising:

(a) detecting dullness of a cutting tool as it operates, and

(b) generating a detection signal,

(c) employing said detection signal to initiate a sharpening operation by automatically controlling the operation of a radiation beam generating means and relative scanning movement between said beam generating means and said tool to effect control scanning an erosion of material of said tool adjacent the cutting edge thereof.

29. A method in accordance with Claim 28 wherein said dullness is effected by detecting one or more variables occurring during cutting with said tool including tool vibration, cutting resistance, temperature generated by friction during cutting, surface smoothness and cutting noise.

30. A method of shaping a solid material comprising:

(a) generating intense radiation capable of melting matter,

(b) selectively directing said radiation against an article,

- 41 -

(c) effecting controlled scanning movement between said radiation and said article to cause the melting of a select portion of the material of said article, and

(d) directing a stream of high velocity fluid and causing said fluid to effect controlled flow of the melted material of said article across the surface of said article so as to predeterminately change the shape of said article.

31. A method in accordance with Claim 30 including causing a select portion of the material of said article to vaporize and to be removed from the surface of said article so as to affect a select change in the shape of said article.

32. A cutting tool comprising:

(a) a tool base,

(b) a cutting edge portion of said tool base formed with a select rake angle,

- 42 -

(c) the material adjacent said cutting edge of said tool base including the cutting edge portion thereof formed of a non-crystalline metal,

(d) the remaining material of said tool base being formed of a crystalline metal.

FIG.1

FIG.2

FIG.3

FIG.4

FIG.5

FIG.6

0191203

**FIG.7**

**FIG.8**